# EUROPEAN PATENT SPECIFICATION

(11) **EP 0 496 182 B1**
(45) Date of publication and mention of the grant of the patent: **26.07.1995**
(21) Application number: 91830007.0
(22) Date of filing: 17.01.1991
(51) Int. Cl.: A21C 1/02

(54) **Food kneader with extractable tank**
Nahrungskneter mit herausziehbarem Behälter
Pétrisseur d'aliments avec récipient amovible

(43) Date of publication of application: 29.07.1992
(73) Proprietor: ITALIANA MACCHINE SRL, Savignano sul Rubicone (Forli) (IT)
(72) Inventor: Miraglia, Massimo, Villa Verucchio (Forli) (IT)
(74) Representative: Sassatelli, Franco T., Dr.

(56) References cited:
- DE-A- 2 951 530
- DE-A- 3 013 590
- DE-A- 3 151 532
- GB-A- 1 166 195
- US-A- 1 415 720
- US-A- 3 700 250

## Description

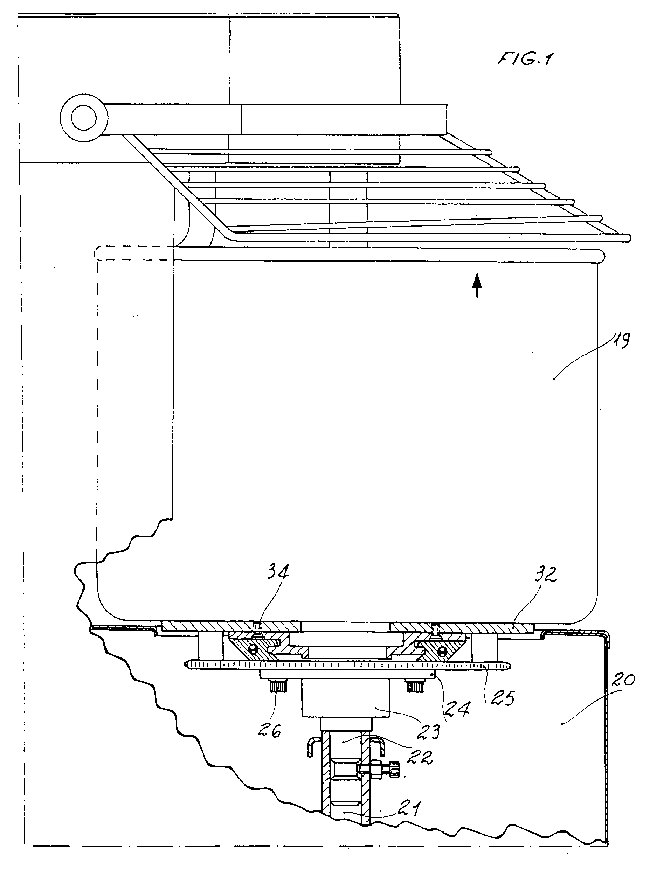

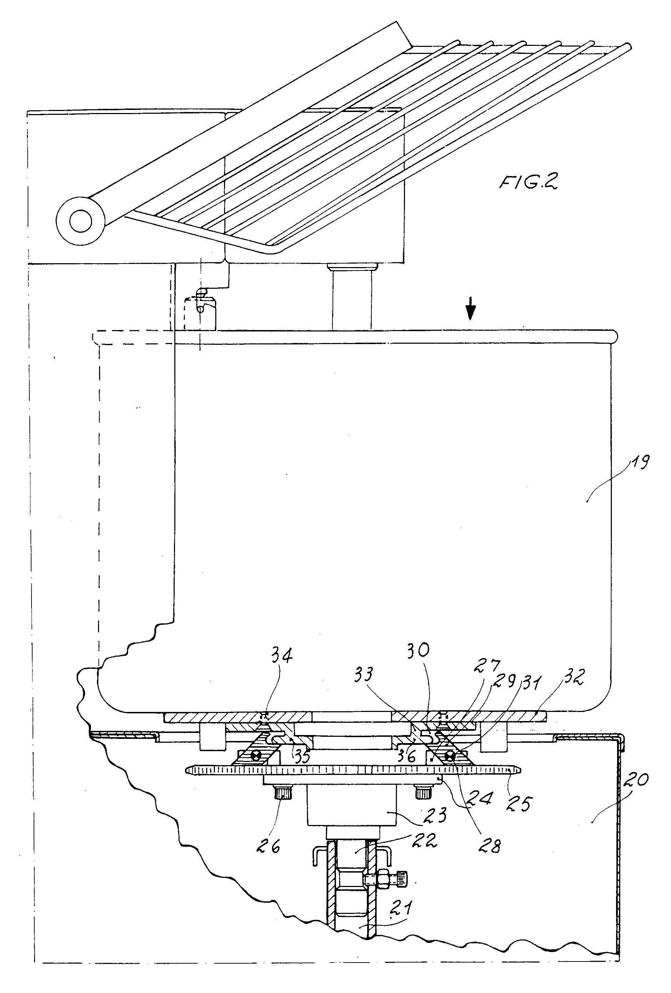

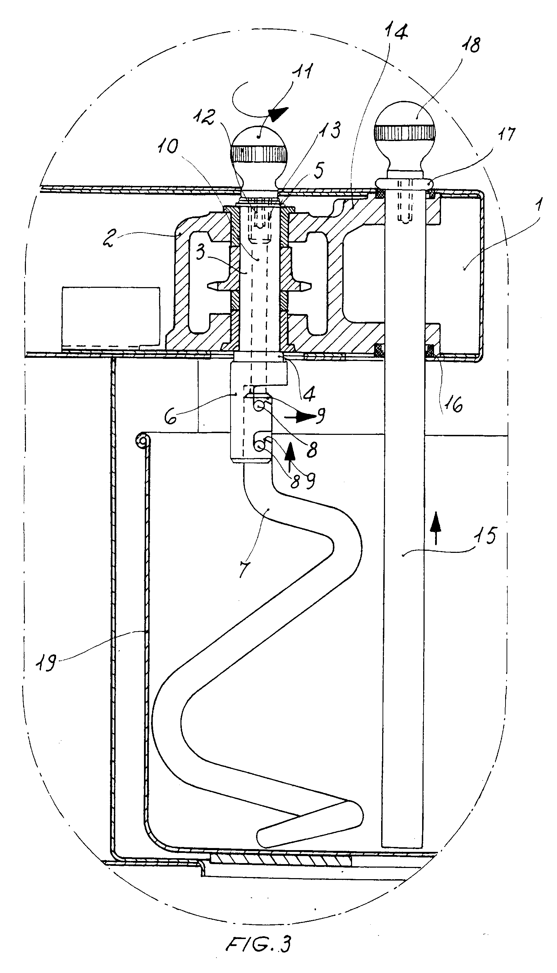

The invention refers to a new food kneader in which, at the working ending, the tank can be extracted so permitting its easy and complete washing along with the other kneading tools. The food kneaders, to be used in the industrial sectors, for communities and different business, particularly pizzerie, pastry-shops, restaurants, canteens and bakeries, are provided with two lowering tools: a central pivot to be fixed to the upper supporting structure, called dough breaker, and a rifle am which turning in the same direction of the tank mixing the components by pushing them against the bottom thus performing their dough in the motion prosecution. Current the presence of these two tools, sinking into the kneading tank, causes the non-mobility of the same tank and therefore a heavy impediment for the cleaning operation of the food kneader and of the same tank. At the end of the working, after having extracted with hands the dough, it must proceed, in an evident unconfortable way, to remove the residues from the tank and from the mixing tools that are inside the tank. This causes a considerable waste of time and an operative condition prejudicial from the hygienic point of view. This due to the fact that, since the parts cannot be washed with water jet, the opeartor must intervene with other means more difficult. Food kneaders with extractable tank are known, as for instance the apparatus described and shown in the Patent DE-A-3 013 590 and the apparatus described and shown in the Patent DE-A-2 951 530. According to the above prior art are known food kneaders where the tank cannot be extracted to be washed under water. The invented food kneader avoids this inconvenience by using a new tank which, after having disengaged the two douth tools from their working position, is taken away from its motion support so permitting its cleaning with water jet. The invented food kneader consists of a higher projected part with head 1 with an imposing assembly 2 which in a seat 3 provides a quill 4, the upper end of which kept by an elastic ring 5. On the lower end the quill 4 to be fitted with a chuck 6 which supports a rifle arm 7 to be mounted by two pins 8 to be introduced with a quick clutch into the two bayonet sockets 9. Into the quill 4 to be introduced an axial pin 10 with knob 11 having an initial threaded part 12, into the corresponding volute thread 13, in order to avoid with its beating end that the rifle arm 7 gets out. The imposing assembly 2 then centrally provides in seat 14 the dough breaker 15 placed on the ferrule couple 16, kept in position by flange 17 and fitted with catching knob 18. The rifle arm 7 and the dough breaker 15 working inside the tank 19. Said tank 19 supported on bedplate 20 by means of a central support 21. Said central support 21 brings the axial shaft 22 integral with a supporting part 23 providing on a bedplate 24 a crown wheel 25 fixed with four bolts 26. On this crown wheel 25 are foreseen in a radial position four supporting elements 27 for the tank 19 with pivots 28 for movement of the sleds 29 with imposing grooves 30 whereas the clockwise holdup is performed by a disk spring 31. On its bottom to permit the engagement on the bedplate 20, the tank 19 is integral with an initial disk 32 with lower plate 33 fixed by means of eight screws 34 and with a lower mold binding crown 35 with cam 36 for imposing the tank with automatic hooking on the four blocking elements. By hand pressure the tank 19, with automatic coupling, is engaged on the bedplate 20. To disengage the tank 19, first of all the knob 11 is slightly unscrewed so allowing to extract the rifle arm from the tank 19. Then the dough breaker 15 is lifted with knob 18 and it is backed out to take it out from the tank 19. At last the tank 19 is taken with hands and it is raised thus allowing to extract the binding crown 35 from the four spring blocking elements (sleds) 29. In a preferred embodiment the tank 19 is moved by means of a toothed chain which engages the crown wheel 25. A version of the invented food kneader is illustrated in schematic view in the drawings of sheets 1, 2 and 3. In sheet 1 fig. 1 is section cutaway view of a particular of the food kneader with tank 19 on the bedplate 20. The direction arrow shows the impulso upward to perform with hands to get away the tank 19. In sheet 2 fig. 2 is cutaway view of the same components of fig. 1 with direction arrow indicating the push impulse downward to be given with hands to hook the tank 19. In sheet 3 fig. 3 is longitudinal section view of the head 1 with the rifle arm 7 in mixing position and with the dough breaker 15 into the tank 19. In the realizations the shape of the food kneader may change like the operative tools.

## Claims

1. Food kneader with extractable tank consisting of a tank (19) to be extracted, of a head (1) with a quill (4) mounted with the head (1) and with an imposing assembly (2) supporting on its lower part a rifle arm (7) which carries out the knead and where the tank (19) is engaged on the bedplate (20); characterized in that:
- in seat (14) of the imposing assembly (2) a dough breaker (15) is provided;
- on its bottom the tank (19) is integral with an initial disk (32) with a lower plate (33) fixed by means of eight screws (34) and with a lower mold binding crown (35) with cam (36) for imposing the tank with automatic hooking on four blocking elements (29);
- the bedplate (20) is integral with an additional bedplate (24) fitted with a crown wheel (25) fixed with four bolts (26), on this crown wheel (25) are foreseen in radial position four supporting elements (27) for the tank (19), said elements (27) having pivots (28) for movement of the blocking elements (29) and said elements further having imposing grooves (30) corresponding with cam (36) whereas the clockwise holdup is performed by a disk spring (31);
- means (27, 28, 29, 30) for by hand pressure engaging the tank (19) with automatic coupling on the bedplate (20) and means for disengaging the tank (19), wherein the knob (11) is adapted to be slightly unscrewed so allowing the extraction of the rifle arm (7) from the tank (19), further the dough breaker (15) is adapted to be lifted with knob (18) and backed out in order to take it out from the tank (19), the tank (19) is taken with hands and it is raised thus allowing to extraction of the binding crown (35) from the four spring blocking elements (29).

2. Food kneader with extractable tank, as in claim 1), characterized in that the head (1) consists of an imposing assembly (2) with a quill (4) in a seat (3) retained at its upper end by an elastic ring (5); on its lower end the quill (4) is equipped with a chuck (6) supporting the rifle arm (7) to be mounted by two pins (8) to be introduced with quick clutch into the two bayonet sockets (9); and an axial pin (10) with knob (11) having an initial threaded part (12) is adapted to be introduced into the quill (4), said quill having a, corresponding volute thread (13), in order to avoid that the rifle arm (7) gets out.

3. Food kneader with extractable tank, as in claim 2), characterized in that the emposing assembly (2) centrally in seat (14) provides for the dough breaker (15) placed on the ferrule couple (16), kept in position by flange (17) and fitted with catching knob (18).

4. Food kneader with extractable tank, as in claim 1), characterized in that the bedplate (20) provides a central support (21) which supports the axial shaft (22) integral with a supporting part (23) providing on a bedplate (24) a crown wheel (25) fixed with four boults (26); on this crown wheel (25) are foreseen in a radial position four supporting elements (27) for the tank (19) with pivots (28) for movement of the blocking elements (29) having imposing grooves (30) whereas the clockwise holdup is performed by a disk spring (31).

5. Food kneader with extractable tank, as per claim 1), characterized in that in an embodiment the tank (19) is to be moved by means of a toothed chain which engages the crown wheel (25).

## Patentansprüche

1. Nahrungskneter mit herausziehbaren Behälter bestehend aus einem herausziehbaren Behälter (19), aus einem Kopf (1) mit einer durchbohrten Welle (4), die durch den Kopf (1) und die Einstellungsgruppe (2) aufgestellt ist, welche auf ihrem unteren Teil einem spiralförmigen. Arm (7) trägt, der das Kneten verwirklicht, wo der Behälter (19) auf dem Untergestelln (20) festgesetzt ist, dadurch gekennzeichnet, daß:
- im Inneren des Sitzes (14) der Einstellungsgruppe (2) ein Teigwarenspalter (15) aufgestellt ist;
- der Grund des Behälters (19) is mit einer initialen Scheibe (32), mit einem unteren Teller (33), der mittels acht Scrauben (34) verbunden ist, und mit einer unteren Fasson mit Bindungskranz (35) einteilig, der mit einem Nocken (36) für die Einstellung des Behälters mittels automatischen Kopplung auf vier Sperrbolzen (29) ausstatten ist;
- das Untergestell (20) ist mit eienem weiteren Untergestell (24) einteilig, welches mit einer Zahnkrone (25) ausrüstet ist, der durch vier Mutterschrauben (26) festgehalten ist; auf dieser Zahnkrone (25) sind vier radialeweisegestellte Halterungselemente (27) für dem Behälter (19) versehen; diese Elemente (27) sind mit den Bolzen (28) für die Bewegung der Sperrbolzen (29) versehen und diese Sperrbolzen (29) sind mit Einstellungsnuten (30) ausstatten, die dem Nocken (36) entspricht, während die rechtsläufige Haltung ist mittels einer Scheibefeder (31) verwirklicht;
- durch Handsdruck binden die Mittel (27, 28, 29 und 30) den Behälter (19) mit automatischer Kopplung auf dem Untergestelln (20) und diese Mittel befreien den Behälter (19); der Kugelgriff (11) kann leicht ausgedreht werden, um die Ziehung des spiralförmigen Armes (7) aus dem Behälter (19) zu erlauben und der Teigwarenspalter (15) kann mittels des Kugelgriffs (18) gehoben und zurückgestellt werden und kann deshalb aus dem Behälter (19) gezogen werden, man kann den Behälter (19) den Händen nehmen und heben, um die Ziehung der Bindungskrone (35) aus dem vier Sperrbolzen mit Feder (29) zu erlauben.

2. Nahrungskneter mit herausziehbaren Behälter, nach Anspruch 1), dadurch gekennzeichnet, daß die Kopf (1) aus einer Einstellungsgruppe (2) mit einer durchbohrten Welle (4) in einem Sitzt (3) bestanden ist, welche mittels eines elastischen Ringes (5) in ihrem oberen Ende getrogen ist; in ihrem unteren Ende ist die durchbohrte Welle (4) mit einem Spannfutter (6) ausstatten, welches den spiralförmigen Arm (7) trägt, der durch zwei Bolzen (8) montierbar ist, die im Inneren zweir Bajonettfassungen (9) durch Eilgangkopplung einsiehbar sind; mit einem axialen Stiften (10) mit Kugelgriff (11), der ein passendes geschmitten Anfangstei (12) hat, um in die durchbohrte Welle (4) eingezogen zu werden, ist diese durchbohrte Welle (4) ausstatten, welche ein entsprechendes spiralförmigen Arm (7) nicht herauskommen kann.

3. Nahrungskneter mit herausziehbaren Behälter, nach Anspruch 2), dadurch gekennzeichnet, daß die Einstellungsgruppe (2) in ihren Mitter (14) der Teigwarenspalter (15) vorseht, welcher auf einem Paar Buchse (16) aufgestellt ist und mittels des Flansches (17) in der Stellung gehalten ist und mit einem Handgriff (18) ausstatten ist.

4. Nahrungskneter mit herausziehbaren Behälter, nach Anspruch 1), dadurch gekennzeichnet, daß der Untergestell (20) mit einem Mitterträger ausstatten ist, der die axiale Welle (22) trägt, welche mit einem Teil des Träges (23) einteilig ist, der mit einer Zahnkrone (25) ausstatten ist, welcher mittels vier Mutterschrauben (26) festgesetzt ist, auf dieser Zahnkrone (25) sind vier radiale Trägeselemente (27) für den Behälter (19) aufgestellt, welche die Bolzen (28) für die Bewegung der Festlemmenselemente (29) haben, die mit Einstellungsnuten (30) versehen sind und die rechtsläufige Haltung ist mittels der Scheibefeder (31) verwirklicht.

5. Nahrungskneter mit herausziehbaren Behälter, nach Anspruch 1, dadurch gekennzeichnet, daß in einer Ausführung den Behälter (19) durch eine Zahnkette, die Zahnkrone (25) führt, bewegt ist.

## Revendications

1. Pétrisseur d'aliments avec récipient amovible comprenant une cuve (19) extractible, une tête (1) avec un arbre creux (4) monté avec la tête susdite (1) et un groupe de positionnement (2) supportant - sur sa partie de dessous - un bras spiroïdal (7) qui effectue le pétrissage et où la cuve (19) est positionnée sur le soubassement (20); caractérisé par le fait que:
- à l'intérieur du siège (14) du groupe de positionnement (2) il existe un cassepétrissage (15);
- sur son fond la cuve (19) est solidaire d'un disque initial (32) avec un disque inférieur plat (33) fixé au moyen de huit vis (34), et d'un gabarit inférieur en forme de couronne de liaison (35) avec une came (36) pour la mise en place de la cuve par accrochage automatique sur quatre éléments de verrouillage (29);
- le soubassement (20) est solidaire d'un soubassement additionnel (24) équipé d'une couronne dentée (25) fixée par quatre boulons (26), sur la couronne dentée susdite (25) en position radiale il existe quatre éléments de support (27) pour la cuve (19), les éléments susdits (27) ayant des pivots (28) pour le mouvement des éléments de verrouillage (29); les éléments susdits ont aussi des fentes de positionnement (30), en correspondence avec la came (36), tandis que leur fixation dans les sens des aiguilles d'une montre est assurée par un ressort à disques (31);
- des dispositifs (27, 28, 29 et 30) fixent la cuve (19) par pression manuelle en l'accrochant automatiquement sur le soubassement (20) et de même des dispositifs dégagent la cuve (19), où le bouton-poignée (11) est envisagé pour être légèrement dévissé afin de permettre l'extraction du bras spiroïdal (7) de la cuve (19), ultérieurment le pétrisseur d'aliments (15) se prête à être soulevé au moyen du bouton-poignée (18) et fait recouler afin de le sortir de la cuve (19), la cuve (19) est extraite manuellement et soulevée afin de permettre l'extraction de la couronne de liaison (35) au dehors des quatre éléments de fixation à ressort (29).

2. Pétrisseur d'aliments avec récipient amovible, selon la revendication 1), caractérisé par le fait que sa tête (1) est constituée d'un groupe de positionnement (2) avec un arbre creux (4) dans un siège (3) maintenu dans son terminal supérieur par un anneau ressort (5); dans son terminal inférieur l'arbre creux (4) a un mandrin (6) supportant le bras spiroïdal (7) qui peut être assemblé au moyen de deux tourillons (8) embrayables par embrayage rapide à l'intérieur des deux joints à baïonnette (9); et d'une goupille axiale (10) avec bouton-poignée (11) ayant une partie initiale taraudée (12) de façon à être introduite dans l'arbre creux (4), l'arbre creux susdit est pourvu en correspondance d'un filetage femelle (13), afin d'éviter que le bras spiroïdal (7) sorte de son siége.

3. Pétrisseur d'aliments avec récipient amovible, selon la revendication 2), caractérisé par le fait que le groupe de positionnement (2) au centre du siège (14) est équipé d'un cassepétrissage (15) positionné sur une couple de coquilles (16), maintenu ed position pr la patte (17) et pourvu d'un bouton-poignée (18).

4. Pétrisseur d'aliments avec récipient amovible, selon la revendication 1), caractérisé par le fait que le soubassement (20) est équipé d'un support central (21) qui soutient l'arbre axial (22) solidaire d'une partie de support (23) envisageant une couronne dentée (25) fixée par quatre boulons (26) sur un soubassement (24); sur la couronne dentée susdite (25) en position radiale il existe quatre éléments de support (27) pour la cuve (19) avec des pivots (28) pour le mouvement des éléments de verrouillage (29) ayant des fentes de positionnement (30) et où l'aju-stage dans le sens des aiguilles d'une montre est assuré par un ressort à disques (31).

5. Pétrisseur d'aliments avec récipient amovible, selon la revendication 1), caractérisé par le fait que, solon une de ses variantes, la cuve (19) est amovible au moyen d'une chaine dentée qui engage la couronne dentée (25).
